# EUROPEAN PATENT APPLICATION

(11) **EP 4 293 617 A1**
(43) Date of publication of application: **20.12.2023**
(21) Application number: 22752845.2
(22) Date of filing: 10.02.2022
(51) Int. Cl.: G06T 7/00, G06T 7/70

(54) **POSITION DETECTION SYSTEM**

(30) Priority: 10.02.2021 JP 2021019909
(71) Applicant: Asterisk, Inc., Osaka-shi, Osaka 532-0011 (JP)
(72) Inventor: SUZUKI Noriyuki, Osaka-shi, Osaka 532-0011 (JP); SETSU Bunpo, Osaka-shi, Osaka 532-0011 (JP)
(74) Representative: TBK
(86) International application number: PCT/JP2022/005502
(87) International publication number: WO 2022/173023

(57) **Abstract**

Provided is a position detection system that is flexibly adaptable to various services and systems. The position detection system 1 includes: a plurality of imaging units 101; a detection unit 201 that detects a position of an object in images generated by the plurality of imaging units 101; a specifying unit 302 that specifies information on the object in an area where fields of view of the imaging units 101 are integrated, based on the position of the detected object; and a transmission unit 303 that transmits the identified information on the object to a host system 2.

## Description

### Technical Field

The present invention relates to a position detection system that detects the positions of persons and objects in a specific area.

### Background Art

A system for understanding customer's behavior in a store and other facilities has been known, and the system is equipped with a camera that captures images of the interior of a store and a computer that analyzes the images generated by the camera to understand customer's behavior. For instance, Patent Literature 1 describes a system (hereinafter referred to as a "detection system") for detecting the identical person. The detection system includes a plurality of cameras, an image processor attached to each of the cameras, and a person management device connected to each of the image processors via a network. Each image processor recognizes a person in the image generated by the camera and transmits the coordinates of the person in the image to the person management device. The person management device calculates the position of the person on the floor plan based on the coordinates of the person acquired from each image processor. This detection system enables accurate detection of the identical person included in the range captured by the plurality of cameras and acquisition of their position.

### Citation List

### Patent Literature

Patent Literature 1: JP 6173376 B

### Summary of Invention

### Technical Problem

Not only in stores but also in other facilities such as logistics facilities and multi-story parking lots have a need of not only monitoring the position of a person (persons and objects) in the facility, but using the detected position information of person for various services and systems. The detection system of Patent Document 1, however, is limited to monitoring a person only, and has difficulty to meet the need.

The present invention aims to provide a position detection system that is flexibly adaptable to various services and systems.

### Solution to Problem

To achieve the above aim, the position detection system of the present invention includes: a plurality of imaging units; a detection unit that detects a position of an object in images generated by the plurality of imaging units; a specifying unit that specifies information on the object in an area where fields of view of the imaging units are integrated, based on the position of the detected object; and a transmission unit that transmits the specified information on the object to a host system.

The detection unit learns an image of the object that is training data, and recognizes an object in the image that is input data acquired from the imaging unit to specify a position of the recognized object.

The position detection system further includes: a camera having each of the imaging units; an image processor having the detection unit; and a main computer having the specifying unit and the transmission unit.

### Advantageous Effects of Invention

The position detection system of the present invention is flexibly adaptable to various services and systems.

### Brief Description of Drawings

Fig. 1 is a schematic diagram of a position detection system according to one embodiment of the present invention.
In Fig. 2, (a) shows a hardware configuration of the camera and image processor included in the position detection system, and (b) is a functional block diagram of the position detection system.
Fig. 3 is a flowchart of the position detection system.
Fig. 4 shows a correspondence between the fields of view of the cameras and the orthogonal coordinate system of the main computer.

### Description of Embodiments

Referring to the drawings, the following describes a position detection system according to one embodiment of the present invention.

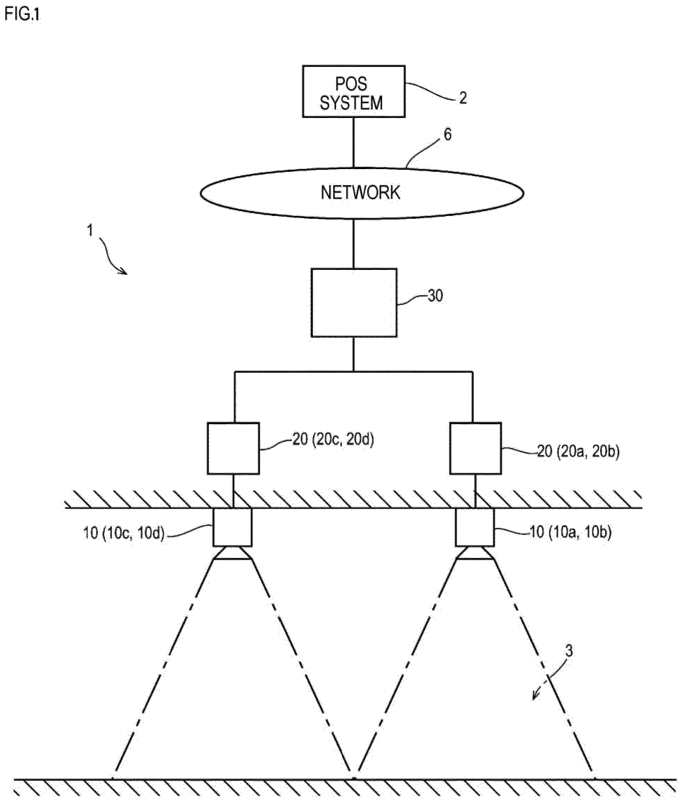

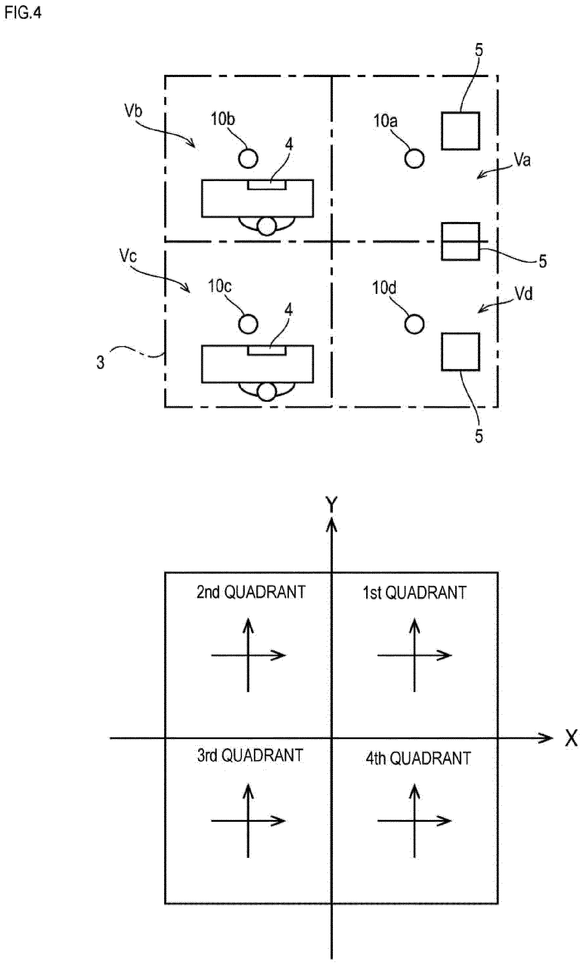

As shown in Figs. 1 and 4, the position detection system 1 according to the present embodiment detects the position of a customer (object) in a checkout area 3 of a store, and works with a POS system 2 that is introduced in the store. The POS system 2 includes a sales record database (not shown) that records the product sales results, and a semi-self checkout machine. The POS system 2 also includes a registration device 4 (Fig. 4) that registers information on sold products, and a payment terminal 5 (Fig. 4), with which a customer makes payment. In this way, the position detection system 1 and the POS system 2 constitute a checkout system of the store.

The position detection system 1 in this embodiment is communicable with the above-mentioned POS system 2 via a network 6 installed in the store. As described later, the position detection system 1 detects the position of a customer present in the checkout area 3 in response to a request from the POS system 2, and provides the detected customer's position to the POS system 2. This position detection system 1 includes a plurality of cameras 10, a plurality of image processors 20, and a main computer 30.

The cameras 10 are attached to the ceiling of the checkout area 3, which are fixed-point cameras that capture images of the checkout area 3 from the mounted positions. As shown in Fig. 4, the present embodiment includes cameras 10a, 10b, 10c, and 10d. These cameras 10a, 10b, 10c, and 10d each generate an image (hereinafter referred to as a field image) corresponding to their field of view areas Va, Vb, Vc, Vd, respectively. In the present embodiment, as shown in the floor plan of the checkout area 3 of Fig. 4, the first camera 10a is placed at the center of the upper right portion (northeast) (in the rectangular checkout area 3, the center of the first quadrant in the orthogonal coordinate system with the center of the checkout area 3 as the origin); the second camera 10b is placed at the center of the upper left portion (northwest) (the center of the second quadrant in the checkout area 3); the third camera 10c is placed at the center of the lower left portion (southwest) (the center of the third quadrant in the checkout area 3); and the fourth camera 10d is placed at the center of the lower right portion (southeast) (the center of the fourth quadrant in the checkout area 3). This first camera 10a has the field of view area Va that is the northeast part of the checkout area 3, and generates a field image of the field of view Va. Similarly, the second camera 10b generates a southeast field image of the checkout area 3, the third camera 10c generates a southwest field image, and the fourth camera 10d generates a northwest field image. In this way, the plurality of cameras 10 are placed at regular intervals, and each camera 10 partially captures the checkout area 3 to generate a field image. Then, as will be described later, the field images generated by the plurality of cameras 10 are integrated in association with the positions of these cameras 10, thus generating an image of the entire checkout area 3.

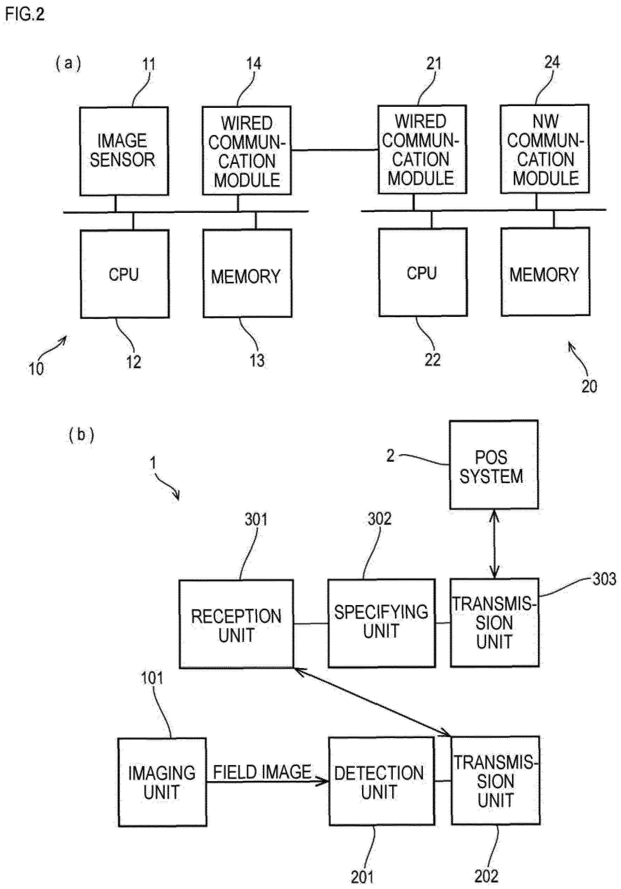

As shown in Fig. 2, each of the cameras 10 is equipped with an image sensor 11. The image sensor 11 of each camera 10 functions as an imaging unit 101 that captures images of the field of view area Va, Vb, Vc, or Vd (Fig. 4) via optical components such as lenses located in front. The output of each image sensor 11 is input to the CPU 12 provided in the camera 10. The CPU 12 controls the image sensor 11 and generates a field image based on the signal input from the image sensor 11. The camera 10 also includes a memory 13 communicably connected to the CPU 12. The memory 13 stores a program to be executed by the CPU 12 and also functions as a storage unit (not shown) that temporarily stores the field image generated by the CPU 12. The camera 10 also includes a wired communication module 14 that is communicatively connected to the CPU 12. The wired communication module functions as a transmission unit (not shown) that transmits the field image generated by CPU 12 to the image processor 20.

As shown in Fig. 1, the image processor 20 detects the coordinates of a person in the field image received from the camera 10. The present embodiment includes a first image processor 20a connected to the first camera 10a, a second image processor 20b connected to the second camera 10b, a third image processor 20c connected to the third camera 10c, a fourth image processor 20d connected to the fourth camera 10d. As shown in Fig. 2, each image processor 20 is equipped with a wired communication module 21. The wired communication module functions as a reception unit (not shown) that receives a field image from the camera 10. The image processor 20 also includes a CPU 22 communicably connected to the wired communication module 21. The CPU 22 functions as a detection unit 201 that detects the coordinates (hereinafter referred to as field coordinates) of a person in the field image acquired from the wired communication module 21. The image processor 20 also includes a network module 24 communicably connected to the CPU 22. The network module 24 functions as a transmission unit 202 that transmits the field coordinates detected by the CPU 22 to the main computer 30. Note that the field coordinates detected by the first image processor 20a are referred to as first field coordinates. Similarly, the field coordinates detected by the second image processor 20b are referred to as second field coordinates, the field coordinates detected by the third image processor 20c are referred to as third field coordinates, and the field coordinates detected by the fourth image processor 20d are referred to as fourth field coordinates.

The detection unit 201 in this embodiment includes a machine learning unit (not shown) having feature amounts of people preset by machine learning such as deep learning using images of people as training data. This machine learning unit uses the field image received from the camera 10 as input data to determine a person in the field image. The detection unit 201 also includes a specifying unit (not shown) that specifies the field coordinates of the determined person. Here, when the image processor 20 detects a person in the field image, the image processor 20 gives identification information to the person. This identification information identifies a person in the field image, and the field coordinates of the person are associated with this identification information.

The main computer 30 specifies the customer's position in the checkout area 3. The main computer 30 has a network module (not shown). The network module communicates with each of the image processors via the network and functions as a reception unit 301 that receives the field coordinates and identification information from each of the image processors 20. The main computer 30 also includes a CPU (not shown) and memory (not shown). The CPU is communicatively connected to the network module and functions as a specifying unit 302 that specifies the position of a customer based on the field coordinates obtained from the network module. The memory is communicably connected to the CPU and stores a program to be executed by the CPU. The network module described above also functions as a transmission unit 303 that transmits the position of the specified customer to the POS system 2, which is a host system.

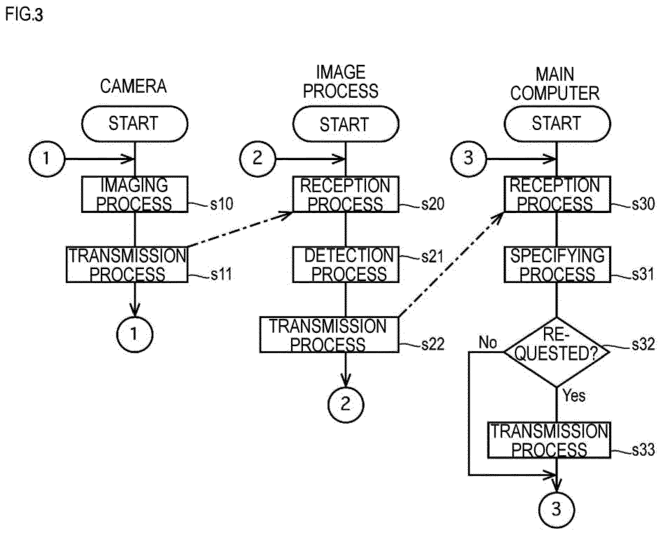

Referring now to Fig. 3, the following describes the operation flow of the position detection system 1 configured as described above.

Each of the cameras 10 in the position detection system 1 performs imaging process (s10) and transmission process (s11) in this order at a predetermined frame rate. The imaging process (s10) captures an image of the field of view of the camera 10 and generates the image of the field of view. The CPU 12 of the camera 10 controls the image sensor 11 to generate a field image in accordance with an electrical signal input from the image sensor 11. Once the field image is generated by the imaging process (s10), the transmission process (s11) is executed. The transmission process (s11) transmits the field image to the corresponding image processor 20, in which the CPU 12 of the camera 10 transmits the field image via the wired communication module 14.

In this position detection system 1, each of the image processors 20 performs detection process (s21) and transmission process (s22) each time it receives a field image from the corresponding camera 10 (s20). The detection process (s21) detects the field coordinates, where the CPU 22 of each image processor 20 applies the field image to a person model generated in advance by deep learning, thus detecting a customer in the field of view Va, for example. Then, the detection process specifies the field coordinates of the detected customer in the orthogonal coordinate system with the origin at the center of the field image, and associates the identification information (hereinafter referred to as first identification information) that identifies the customer with the specified field coordinates. For instance, the first identification information contains a code for identifying the camera and a serial number assigned to each customer. The transmission process (s22) transmits the field coordinates and first identification information of the customer detected by the detection process (s21) to the main computer 30, in which the CPU 22 of the image processor 20 transmits the customer's field coordinates and first identification information to the main computer 30 via the network module 24.

The main computer 30 executes specifying process (s31) each time it receives the field coordinates and first identification information from the image processor 20 (s30). The specifying process (s31) specifies the customer's position in the checkout area 3 based on the received field coordinates. The position of the customer is specified for each piece of first identification information. In this embodiment, the position of the customer in the area where the fields of view of the cameras 10 are integrated is specified in the orthogonal coordinate system shown in Fig. 4. The first field coordinates are developed within the range of the first quadrant of the rectangular coordinates. Similarly, the second field coordinates are developed within the second quadrant, the third field coordinates are developed within the third quadrant, and the field coordinates are developed within the fourth quadrant. For instance, the main computer 30 adds 1/2 of the width dimension of the field image to the acquired x value of the first field coordinates, and adds 1/2 of the height dimension of the field image to the acquired y value of the field coordinates. This allows the main computer 30 to specify the acquired field coordinates as the customer's position in the checkout area 3, thus temporarily storing the specified customer's position in memory, issuing new second identification information to identify the customer, and storing the identification information associated with the customer's position.

When receiving a request from the POS system 2, which is the host system (s32: Yes), the main computer 30 transmits the customer's position and second identification information temporarily stored in the memory to the POS system 2 (s33).

For instance, the POS system 2 sends a request to the main computer 30 on the condition that the registration device 4 newly registers a product. Then, the POS system 2 receives the position of the customer and the second identification information of the customer sent from the main computer 30. Then, the POS system 2 associates the registered product information with the customer's position and the second identification information. After that, the POS system 2 periodically sends a request to the main computer 30 to receive the customer's position and second identification information, thus tracking the customer's movement. When it is determined that the customer has moved to the front of a settlement machine 5, the POS system 2 extracts product information corresponding to the customer's identification information, and transmits the product information together with checkout information to the settlement machine 5.

In this way, the position detection system 1 of the present embodiment provides the customer's position information to the POS system, which is a host system. This allows the customer to freely select any available payment terminal 5 without the system having to specify a payment terminal to the customer. Thus, the position detection system 1 in the present embodiment can be used flexibly for checkout services using a POS system.

### [Modified Example 1]

The above embodiment describes an example of the position detection system 1 that detects the position of the customer in the checkout area 3 of the store and works with the POS system 2. The present invention is not limited to this embodiment. For instance, the position detection system may detect the position of a car (object) in a multi-story parking lots and work with a parking fee management system. Specifically, the system includes a plurality of cameras 10 on the ceiling of each floor of the parking lot, an image processor 20 for each camera 10, and a main computer 30, each of the image processors 20 receiving a field image from the corresponding camera 10, detecting the coordinates of a car (field coordinates) in the received field image, and transmitting the detected field coordinates to the main computer 30. The main computer 30 specifies the position and identification information of the car on each floor, and transmits the specified position and identification information of the car to the parking fee management system in response to the identification. The parking fee management system includes a settlement machine that performs settlement based on the parking time of a car. Each time the parking fee management system receives the position and identification information of a car from the main computer 30, the system counts the parking time of the car and determines whether the position of the car is in the exit area (in front of the settlement machine). If a certain car is located in the exit area, the system stops counting of the parking time of the car. Then the system calculates the parking time, and transmits the parking fee information to the settlement machine. This allows the settlement machine to perform the parking fee payment process without requiring a parking ticket.

### [Modified Example 2]

The position detection system 1 of the embodiment described above may work with a parking management system that manages the positions of vehicles parked in a multi-story parking lot. This position detection system 1 includes a plurality of cameras 10 that are attached to the ceiling of the parking lot and generate field images at a predetermined frame rate. The system includes image processors 20 each connected to the corresponding camera 10. Each time the image processor 20 acquires a field image from the corresponding camera 10, the image processor 20 detects the field coordinates of the car in the field image, and transmits the detected field coordinates to the main computer 30. Each time the main computer 30 acquires the field coordinates from each image processor 20, the main computer 30 specifies the position of the vehicle in the parking lot, and transmits the specified position information to the parking management system.

This parking management system is installed in a multi-level parking lot that is used for storage of automobiles, for example. The system includes a reader that reads vehicle identification information assigned to a vehicle, and a server that associates the identification information read by the reader with the position information of the vehicle received from the position detection system 1 for management, where the reader and the server are communicably connected to via a network.

Typically, the reader is an RFID reader, which reads vehicle identification information stored in a RF tag attached to each vehicle. The reader is installed at the entrance of the parking lot, reads the vehicle identification information of a vehicle entering the parking lot, and transmits the read vehicle identification information to the server.

The server receives the vehicle identification information transmitted from the reader and the vehicle position information transmitted from the position detection system 1. The server checks the position information of the vehicle received from the position detection system 1 at the timing of receiving the vehicle identification information, extracts the position information of the vehicle at the coordinates corresponding to the entrance of the parking lot, and associates the extracted position information with the received vehicle identification information. After that, the server associates the vehicle identification information with the position information that has changed according to the movement of the vehicle to update the position information, thus tracking the position of the vehicle in the parking lot.

The parking management system further includes a user terminal. The user terminal is a terminal of a user (a worker in the vehicle storage) who uses the parking lot, and is typically a smartphone or a tablet terminal owned by the user. The user terminal is communicable with the server via the network as described above, and a position search application is installed in the user terminal. The CPU of the user terminal executes the position search application, thus letting the user enter the vehicle identification information of the vehicle whose position the user wants to know, and requesting the server to transmit the position information corresponding to the entered vehicle identification information and presenting the vehicle position information received from the server to the user. This allows the user to easily specify the position of the parked vehicle.

The position detection system 1 of Modified Example 2 is not limited to working with a parking management system, and may work with an article management system that manages articles in a distribution warehouse. In this embodiment, a plurality of cameras 10 are installed on the ceiling of the distribution warehouse, and image processors 20 detect the field coordinates of the articles in the field image generated by the cameras 10 and transmit them to the main computer 30. The main computer 30 specifies the position information of the articles in the warehouse based on the field coordinates received from the image processors 20 and transmits the information to the article management system. The article management system not only manages the positions of the articles stored in the warehouse, but also may request the position detection system 1 to transmit a field image and provide the received field image to the user terminal. The article management system then not only transmits the position of the articles stored to the user terminal (the terminal of the worker in the distribution warehouse), but also transmits the field image corresponding to the position to the user terminal.

### [Modified Example 3]

The position detection system 1 of the present embodiment may work with an order system in a restaurant. This position detection system 1 includes a plurality of cameras 10 that are attached to the ceiling in the restaurant and generate field images at a predetermined frame rate. The system includes image processors 20 each connected to the corresponding camera 10. Each time the image processor 20 acquires a field image from the corresponding camera 10, the image processor 20 detects the field coordinates of a customer in the field image, and transmits the detected field coordinates to the main computer 30. Each time the main computer 30 acquires the field coordinates from each image processor 20, the main computer 30 specifies the position of the customer in the restaurant, and transmits the specified position information to the order system.

For instance, the order system described above is used in fast-food restaurants. In the fast-food restaurant, a customer who enters the restaurant orders desired products at a checkout counter and pays the bill. The customer then moves to an empty table and waits for the ordered products to be brought by the hall staff. A checkout device is installed at the checkout counter of the restaurant. The checkout device includes a tablet terminal and a cashier. The tablet terminal displays a list of products and detailed product information on its touch panel display. The customer operates the touch panel display to select desired products. The tablet terminal then transmits to the cashier the checkout information for the products selected by the customer and displays the checkout information on the touch panel display. The cashier performs settlement, and when the customer makes a payment, the cashier transmits information indicating that the payment has been completed (payment completion information) to the tablet terminal. The tablet terminal is communicable with the server. Upon receiving payment complement information from the cashier, the tablet terminal transmits product information and checkout information for the products selected by the customer to the server.

The server is communicable with the checkout device (tablet terminal) and the position detection system 1, and receives product information and checkout information from the checkout device and receives customer's position information from the position detection system 1. The server then checks the latest customer's position information received from the position detection system 1 at the timing of receiving the product information from the checkout device. Then, the server extracts the position information of the customer existing within a predetermined range from the coordinates of the checkout counter, associates the position information with the product information and the order number, and stores it in the memory. After that, each time the server receives position information (position information that changes according to the movement of the customer) from the position detection system 1, the server associates the position information with the received product information and order number for updating (storing in the memory), thus tracking the customer's position in the restaurant.

The order system further includes a user terminal. The user terminal is used by a store clerk in the restaurant, and is a tablet terminal or a glasses-type information display device, for example. The user terminal is communicable with the server via the network as described above, receives the order number or product information from the server, receives the customer's position information, and displays these pieces of information on its display unit (display). The user (store clerk) brings the finished product to the customer's position according to the position information displayed on the display unit of the user terminal. If the restaurant is equipped with a transport robot that transports products to the customer, the position information of the customer may be transmitted to the robot.

The position detection system 1 according to Modified Example 3 is not limited to working with the order system in a fast-food restaurant, and may work with an order system in a pharmacy. In this embodiment, cameras 30 of the position detection system 1 will be installed on the ceiling of the pharmacy. The order system associates position information with patient identification information assigned to each patient who comes to the pharmacy for management, thus tracking the position of the patient, and also transmits the position information and the medicine to be prescribed to the user terminal used by the staff.

### [Modified Example 4]

In the above embodiments and modified examples, the position detection system 1 works with one host system. The system may work with a plurality of host systems. For instance, the position detection system 1 may work with the POS system 2 provided in a store and a crime-prevention system in the store. The crime-prevention system includes a mobile information terminal used by a store clerk, an automatic door installed at the entrance of the store, and a controller communicably connected to the mobile information terminal and the automatic door. The controller is communicable with the position detection system 1 via a network.

Similar to the above embodiments, the POS system 2 and the crime-prevention system transmit a position information request to the main computer 30 of the position detection system 1, and the main computer 30 sends the position information to the POS system 2 and the crime-prevention system in response to the request. If the received position information of the customer changes continuously and does not stop in a predetermined area (the area of the registration device and the payment device), the crime-prevention system sends warning information to the mobile information terminal of the store clerk, and automatically sends a control signal to the automatic door to make it open and close more slowly than usual.

### [Modified Example 5]

In the above-described embodiment and modified examples, one image processor 20 is connected to one camera 10. The system may be configured so that one image processor 20 is connected to multiple cameras 10. For instance, one image processor 20 may be communicably connected to two cameras 10 that are placed so that their viewing ranges are adjacent to each other. In this embodiment, the image processor 20 sends a request to the two cameras 10. The request is information requesting transmission of a field image, and is transmitted to the two cameras 10 at the same timing. Upon receiving the request, the cameras start the imaging process. The two cameras 10 thereby generate a field image captured at the same timing, and transmit the generated field images to the image processor 2. When the image processor 20 acquires the field images from the two cameras 10, it generates a connected image of the acquired field images that are placed side by side and detects the coordinates of a person in the connected image. The image processor 20 sends the detected coordinates of the person to the main computer 30, which specifies the position of the person based on the received coordinates.

### [Modified Example 6]

In the above-described embodiment and modified examples, a camera 10 and an image processor 20 are provided independently. The camera 10 and image processor 20 may be provided in a single unit.

### [Modified Example 7]

In the above embodiments and modified examples, the main computer 30 specifies the position of a person (object) in an area where the field of views of the cameras are integrated (hereinafter referred to as the integrated area), and transmits the specified position to the host system. The present invention is not limited to this embodiment. For instance, the main computer 30 may specify the position of an object in the integrated area, and determine whether or not the specified position is in a predetermined portion of the integrated area. If it is in the predetermined portion, the main computer 30 may send the identification information on the object to the host system.

### [Modified Example 8]

In the above embodiments and modified examples, the imaging unit 101 includes the cameras 10 that are installed on the ceiling and two-dimensionally capture an image directly below from the installation positions. The present invention is not limited to this. For instance, the imaging unit 101 may include a camera that captures an image obliquely downward from around the ceiling of the wall surface. In this case, a TOF camera may be used to detect two or more objects that intersect within the field of view of these cameras. The TOF camera detects the distance from each object, thus distinguishing the object in front and the object in the back, and detecting their coordinates accurately. The positions of two or more objects when they intersect may be determined from the movement pattern of each object until they intersect.

### [Modified Example 9]

The cameras 10 may be infrared cameras. The infrared cameras enable detection of objects in dark environment.

### [Modified Example 10]

Different types of cameras 10 may be used depending on the environment in which they are installed. For instance, a TOF camera is used when capturing an image of a field of view where objects intersect, and an infrared camera is used when capturing an image in a relatively dark place. In this way, different cameras can be used depending on the environment, thereby reducing the cost of the entire system.

### Reference Signs List

- 1: Position detection system
- 10: Camera
- 20: Image processor
- 30: Main computer
- 101: Imaging unit
- 201: Detection unit
- 302: Specifying unit
- 303: Transmission unit

## Claims

1. A position detection system comprising:
a plurality of imaging units;
a detection unit that detects a position of an object in images generated by the plurality of imaging units;
a specifying unit that specifies information on the object in an area where fields of view of the imaging units are integrated, based on the position of the detected object; and
a transmission unit that transmits the specified information on the object to a host system.

2. The position detection system according to claim 1, wherein the detection unit learns an image of the object that is training data, and recognizes an object in the image that is input data acquired from the imaging unit to specify a position of the recognized object.

3. The position detection system according to claim 1 or 2, further comprising:
a camera having each of the imaging units;
an image processor having the detection unit; and
a main computer having the specifying unit and the transmission unit.

4. The position detection system according to any one of claims 1 to 3, wherein each camera and the image processor are disposed in a single unit.
